# EUROPEAN PATENT APPLICATION

(11) **EP 1 101 647 A2**
(43) Date of publication of application: **23.05.2001**
(21) Application number: 00110536.0
(22) Date of filing: 17.05.2000
(51) Int. Cl.: B60K 31/00, B60K 35/00

(54) **Method and device for automatic speed and distance control of a vehicle**

(30) Priority: 19.11.1999 IT TO991016
(71) Applicant: FIAT AUTO S.p.A., 10135 Torino (IT)
(72) Inventor: Carrea, Paola, 10091 Algnono (IT); Donato, Mariangelo, 10124 Torino (IT); Montanari, Roberto, 42019 Scandiano (IT); Poncini, Gianfranco, 10129 Torino (IT)
(74) Representative: Cerbaro, Elena, Dr.

(57) **Abstract**

The method comprises the steps of: a) setting a first operative value indicative of the speed to which the controlled vehicle must be maintained; b) selecting an operating condition of the vehicle indicative of a relative distance between the controlled vehicle and a preceding vehicle; c) effecting automatic control of the speed and distance of the controlled vehicle as a function of the said first and second operative value; d) detecting the traffic conditions present in a region in front of the controlled vehicle; e) upon detection of the presence of a preceding vehicle in the path of the controlled vehicle but only after the said steps a), b) and c) have been performed at least once, displaying (100) on a display unit (4) an indication representative of the presence of the preceding vehicle; f) detecting interventions by the driver of the controlled vehicle on acceleration/deceleration control members of the controlled vehicle; g) upon detection of an intervention of the driver on one of the accelerations/deceleration control members interrupting the automatic control of the speed and distance of the controlled vehicle and maintaining the display of the indication of the presence of the preceding vehicle.

## Description

The present invention relates to a method and a device for the automatic speed and distance control of a vehicle.

Various automatic speed and distance control devices for a vehicle are known, commonly also known by the English term "adaptive cruise control", having the purpose of automatically controlling the acceleration and deceleration of the vehicle in such a way that, in the absence of preceding vehicles, a cruise speed set by the driver is achieved; upon approaching a preceding vehicle, such control devices pass from automatic speed control to automatic distance control, thereby maintaining the distance between the two vehicles as a function of the speed of the two vehicles themselves and the operating conditions set by the driver and then by accelerating or decelerating on the basis of whether the difference between the distance from the obstacle and a set cruise distance is positive or negative.

Such control devices are autonomous, that is they do not require any communication between vehicles, nor do they require that other vehicles be equipped with a similar device, and are based on the use of a sensor device (radar, laser, video camera) positioned in the front part of the vehicle for the purpose of detecting the traffic conditions in the region in front of the vehicle itself. With such control devices, moreover, the driver remains in any event totally responsible for the control of the vehicle in that any action on the brake or accelerator pedal prevails over the control effected by the automatic speed and distance control device.

The driver is also provided, in summary form via a simple display panel at dashboard level, with indications relating to the set cruise speed, the presence of a preceding vehicle in the path of the vehicle on which the control device is installed, and the cruise distance to which the vehicle is maintained with respect to the preceding vehicle.

For safety reasons, moreover, in known automatic control devices access to the automatic cruise speed and distance control function is obtained only after having set the data relating to the cruise speed and distance, whilst in the absence of such data the control device is simply accessed but not operative.

However, once the cruise speed and distance values have been set, the control device operates in such a way that if there is no vehicle identified in the path the control device maintains the set cruise speed whilst if a vehicle is identified in its path the control device automatically guarantees the maintenance of the set distance from the preceding vehicle.

Moreover, any action by the driver on the brake pedal to reduce the speed of the vehicle disables the automatic speed and distance control and once the action exerted on the brake pedal has terminated the control device does not return to the automatic speed and distance control mode but remains simply accessed and not operative.

Reinstatement of the automatic speed and distance control can be achieved only by again introducing values of the cruise speed and distance or by recalling those previously set.

Any operation by the driver on the brake pedal moreover interrupts the display showing the presence of a vehicle in the path of the vehicle and the distance to which the vehicle is maintained with respect to the preceding vehicle, and this is reinstated only when the control device automatically again enters into the automatic speed and distance control mode.

Any action by the driver on the accelerator pedal to increase the speed of the vehicle, on the other hand, only temporarily disables the automatic speed and distance control to allow the set cruise speed, to be exeded and upon cessation of the action exerted on the accelerator pedal the control device automatically returns the vehicle to the set speed.

During the period for which manual control is temporarily installed the display showing the presence of a preceding vehicle is also interrupted as is the indication of the distance to which the vehicle is maintained with respect to the preceding vehicle, and the driver is provided with an indication of temporary return to manual control of the vehicle for example by making the cruise speed indication flash.

Automatic speed control devices of the above-described type are particularly advantageous both from the point of view of driving comfort and that of safety in that it relieves the driver from having to adapt the speed of the vehicle to the traffic conditions and maintains the distance of the vehicle from a preceding vehicle within adequate limits. This, from the point of view of economy and efficiency, translates into a reduction in fuel consumption and an increase in the flow of traffic thanks particularly to the automatic speed control.

However, the fact that upon any actuation of the brake pedal the automatic speed and distance control function is disabled and the display of the speed indication and presence of a preceding vehicle and maintained distance are consequently interrupted, means that not only the effective time for which the automatic control device operates automatically to control the speed and distance, but also the time for which the information relating to the preceding vehicle is displayed, which is generally very useful to the driver, are on average very much less than the time for which the vehicle is in motion, with the consequence that the automatic control device is on average utilised very little.

This aspect, together with the fact that an automatic control device adds to the final price of the vehicle because of the necessity of utilising a sensor device, means that the benefits which a control device is able to offer in terms of driving comfort and safety, and information on traffic conditions, are not proportional to the costs which it is necessary to support and this could discourage possible purchasers from arranging to have such an automatic control device on their vehicle.

The object of the present invention is that of providing a method and an automatic speed and distance control device for a vehicle which allows greater exploitation of the control device itself by the driver whilst nevertheless conserving the predominance of the manual control of the driver over automatic control effected by the device.

According to the present invention there is provided a method of automatic speed and distance control of a vehicle, as defined in Claim 1.

According to the present invention there is provided an automatic speed and distance control device for a vehicle, as defined in Claim 8.

For a better understanding of the present invention a preferred embodiment is now described purely by way of non-limitative example and with reference to the attached drawings, in which:
Figure 1 partially and schematically illustrates the passenger compartment of a vehicle provided with an automatic control device formed according to the present invention;
Figure 2 is a block schematic diagram of the automatic control device Figure 1;
Figures 3a and 3b illustrate a flow diagram relating to some of the operations implemented by the automatic control device of Figure 1; and
Figures 4a, 4b, 4c and 4d illustrate icons which can be displayed on a display unit forming part of the automatic control device of Figure 1.

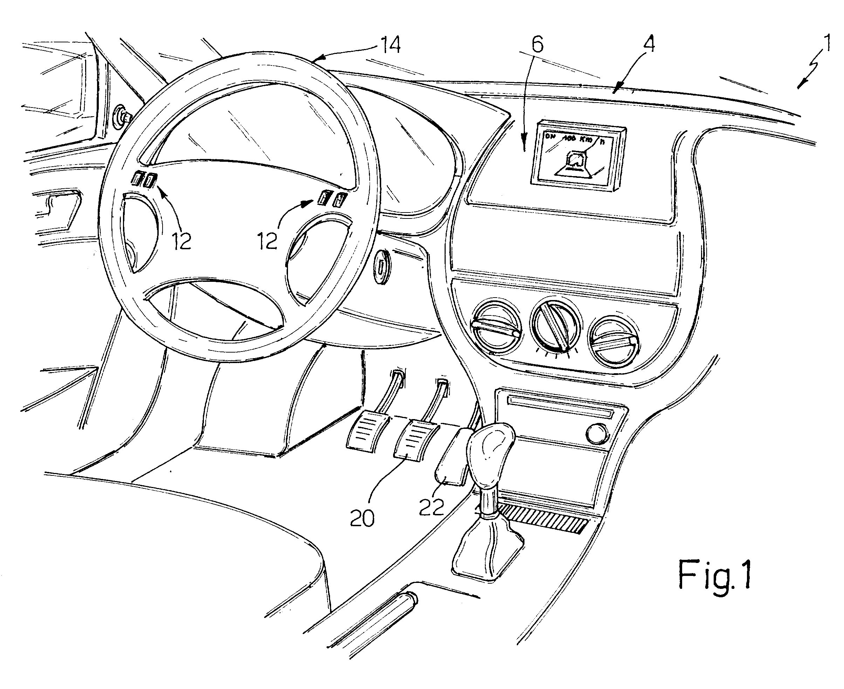

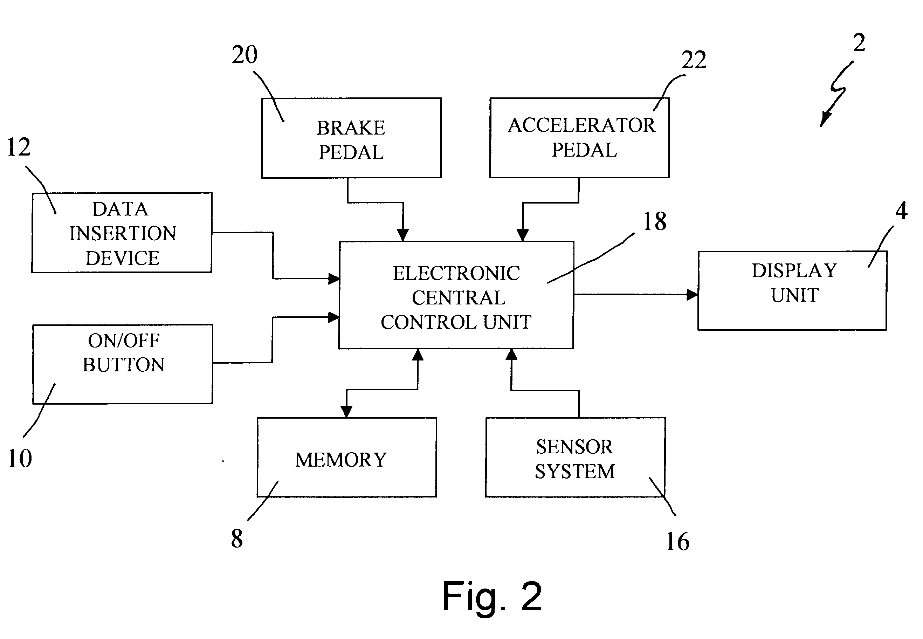

In Figure 1 there is partially illustrated, indicated with the reference numeral 1, a passenger compartment of a vehicle provided with an adaptive cruise control device 2 formed according to the present invention and the general block diagram of which is illustrated in Figure 2.

In particular, in Figures 1 and 2 there are shown only the parts of the control device 2 necessary for an understanding of the present invention; for a more detailed treatment of a vehicle speed control device see, for example, European Patent Application EP-A-661 188 in the name of the same applicant.

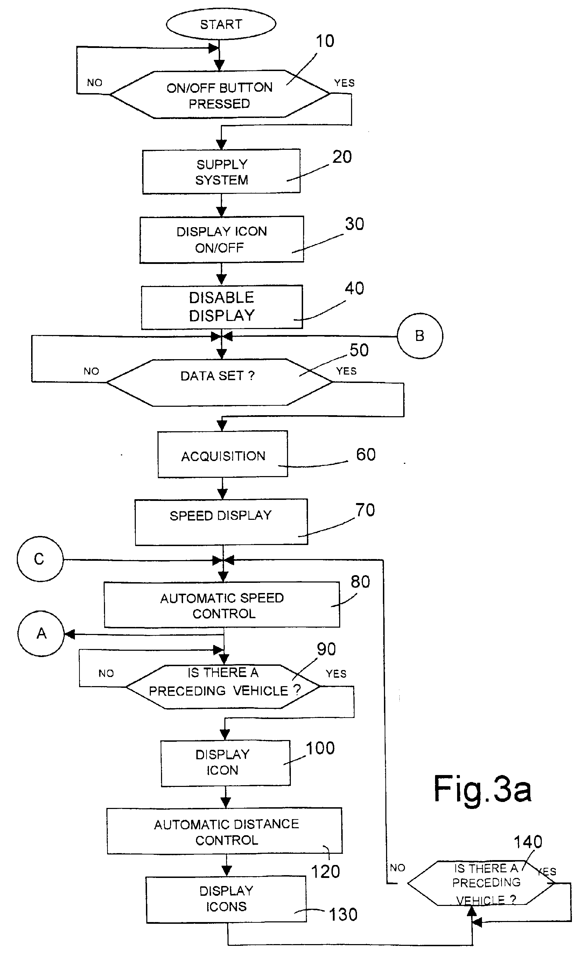

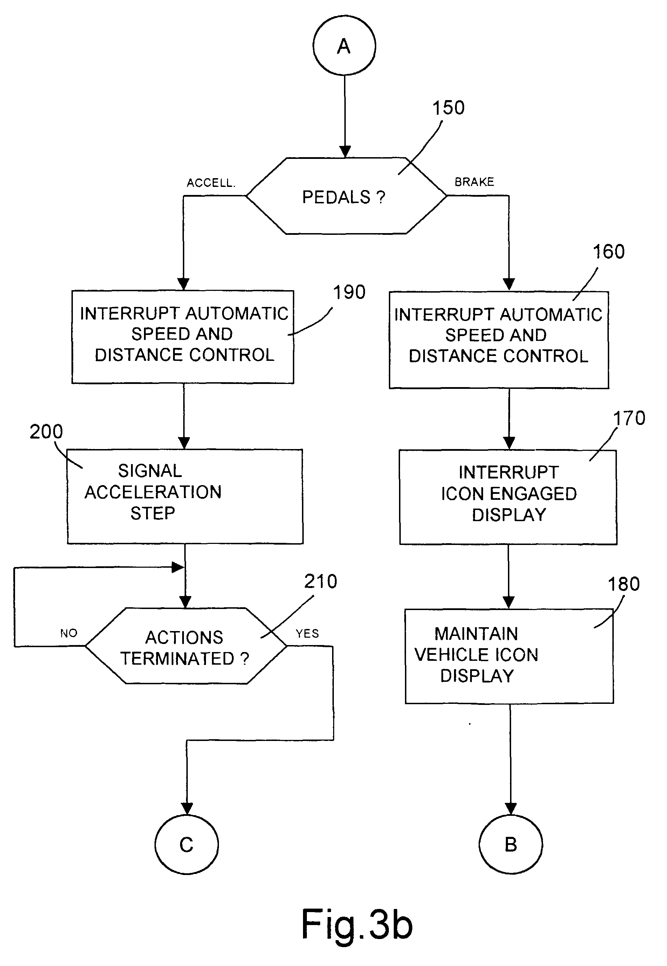

With reference to Figures 1 and 2, the control device 2 essentially comprises a display unit 4 for example of the liquid crystal type, located on the dashboard 6 of the vehicle in such a way as to be easily visible to the driver, or else at the centre of the dashboard, and on which are displayed indications relating to the cruise speed set by the driver, the presence or absence of a preceding vehicle in the path of the vehicle, and the distance to which the vehicle is maintained with respect to the preceding vehicle; a memory 8 (Figure 2) in which are stored the data relating to the cruise speed and distance set by the driver in the last data setting operation; an on/off button 10 for turning the automatic control device 2 on and off; a data entry device 12 for setting the cruise speed and cruise distance to which the vehicle must be maintained with respect to the preceding vehicle and for controlling the other functions as will be described in more detail hereinafter; a sensor device 16 (Figure 2) disposed in the front part of the vehicle to monitor the traffic conditions in the region in front of the vehicle itself; and an electronic central control unit 18 (Figure 2) connected to the display unit 4, the memory 8, the on/off push button 10, the data entry device 12, the radar installation 16, the brake pedal 20 and the accelerator pedal 22 for controlling the fuel injection system and the braking system of the vehicle (not shown in the drawings) to control automatically the cruise speed of the vehicle and its distance from the preceding vehicle by implementing the operations described hereinafter with reference to the flow diagrams shown in Figures 3a and 3b.

In particular, the data entry device 12 can be formed in different ways, for example by means of a plurality of keys positioned ergonomically on the steering wheel 14 of the vehicle and operable to allow activation of the data entry function, increase and decrease in the cruise speed, setting of the cruise distance to be maintained with respect to the preceding vehicle and recall from the memory 8 of the last data entered.

The general operation of the automatic control device 2 will now be described with reference to the flow diagram illustrated in Figures 3a and 3b, taking into consideration as an initial condition the automatic control device being turned off, and indicating with the term "controlled vehicle" the vehicle on which the control device 2 is installed and with the term "preceding vehicle" the vehicle ahead of the controlled vehicle and in its path.

As illustrated in these drawings, initially the central control unit 18 constantly detects if the on/off push button 10 has been pressed to turn on the automatic control device 2 (block 10).

Having detected operation of the on/off push button 10 (output YES from lock 10) the central control unit 18 commands the automatic control device 2 (block 20), to display a standardised ISO icon on the display unit 4 for the purpose of signalling to the driver that the automatic control device is turned on (block 30) but inhibits the device from displaying information relating to the indication of the presence of a preceding vehicle along the path (block 40).

In this situation, in fact, the automatic control device 2 is only accessed but not yet operative, that is to say not yet effecting any automatic control of the cruise speed and distance and therefore no information relating to the presence of a preceding vehicle is provided to the driver, who is therefore in the main of the fact that the control of the vehicle is still under his manual control.

The central control unit 18 is in a waiting state waiting for commands from the driver relating to the activation of the automatic control device 2 (block 50).

When it is detected that the driver has set the data relating to the desired cruise speed and distance (output YES from block 50), then the central control unit 18 acquires this data (block 60) and controls the display of the set cruise speed (block 70) and then activates the automatic control device 2, which then starts to effect automatic control of the cruise speed of the controlled vehicle to maintain it at the value entered by the driver (block 80).

In particular, the current speed of the controlled vehicle is considered as the reference cruise speed and displayed on the display unit 4 and, via the data entry device 12, the driver can increase or decrease this reference cruise speed by steps of predetermined magnitude, for example 5 or 10 km/h, between a minimum and a maximum value and the new cruise speed is displayed on the display unit 4 in place of the preceding indication.

Moreover, for the purpose of guaranteeing that the safety distance of the controlled vehicle from the preceding vehicle is always respected in any event, for example this safety distance being a function of the cruise speed of the controlled vehicle, the automatic control device 1 does not allow the driver to enter the value of the distance to be maintained entirely at will, but only allows him to choose from a plurality of operating conditions indicative of greater or lesser relative distances with respect to the preceding vehicle, which are dependent on the value of the cruise speed set by the driver.

For example, the driver could be enabled to select one of three operating conditions, in which the first operating condition is indicative of the fact that the vehicle is maintained, with respect to the preceding vehicle, at the safety distance (SPORT condition), the second operating condition is indicative of the fact that the vehicle is maintained, with respect to the preceding vehicle, at a greater distance than the safety distance (NORMAL condition) and the third operating condition indicative of the fact that the vehicle is maintained, with respect to the preceding vehicle, at a very much greater distance than the safety distance (COMFORT condition).

The value of the cruise speed and the operating conditions selected can then be varied at any instant within the above-mentioned limits by means of the data entry device 12.

The central control unit 18 then starts to process the information on the traffic present in the region in front of the controlled vehicle and provided from the sensor device 16 for the purpose of detecting the presence of a preceding vehicle along the path of the controlled vehicle (block 90).

As soon as the central control unit 18 detects the presence of a vehicle in the path of the controlled vehicle it now controls the display of an icon signalling to the driver the presence of an obstacle in the path of the controlled vehicle (block 100).

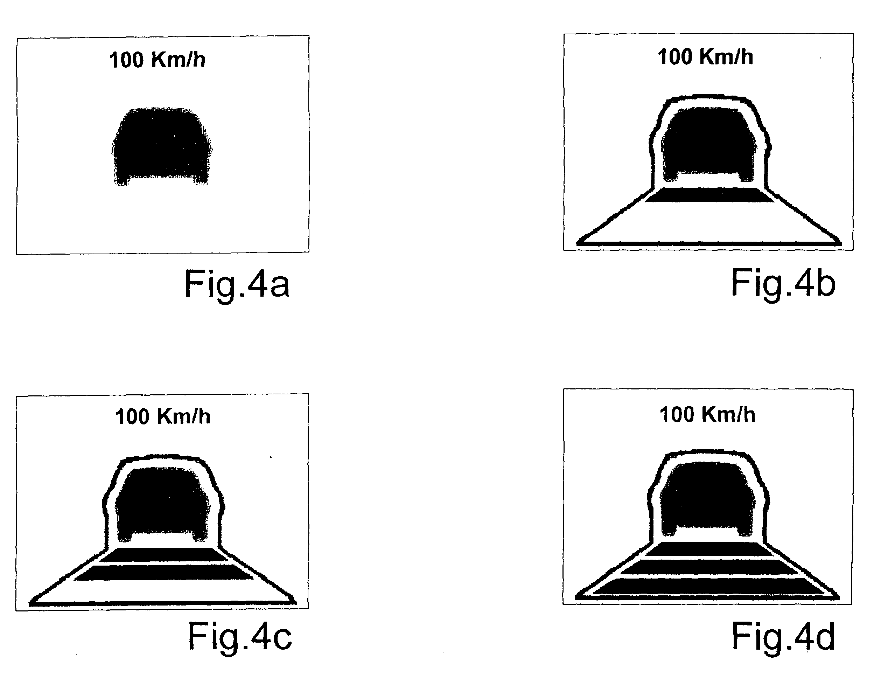

In Figure 4a there is shown by way of example a possible icon which can be displayed on the display unit 4 to signal to the driver the presence of an obstacle. Above this icon there is further displayed the cruise speed set by the driver.

It must be emphasised that the information relating to the presence of an obstacle in the path of the controlled vehicle is provided to the driver, that is the associated icon is displayed on the display unit 4, only after the automatic control device 2 has become operative at least once, that is to say only after the driver has at least once set the data relating to the cruise speed and the operating condition and the automatic control device 2 has exercised control of the cruise speed and distance at least once.

It is therefore evident that if, immediately after starting the automatic control device 2 by means of the on/off push button (detected in block 20) there is a vehicle (the preceding vehicle) in the path of the control vehicle, this obstacle is not signalled to the driver, that is to say the icon signalling an obstacle is not displayed on the display unit 4, and this indication will be provided to the driver only after he has set data relating to the cruise speed and distance and the automatic control device 2 has started to effect automatic speed control.

As soon as the preceding vehicle is displayed on the display unit 4 the automatic control device 2 enters into the automatic distance control mode to maintain the distance between the controlled vehicle and the preceding vehicle at the value indicated by the selected operating condition (block 120).

During this phase the automatic distance control prevails over the automatic speed control which, however, can increase or decrease the speed with limited acceleration and deceleration without, however, exceeding the set value.

As soon as the automatic control device 2 enters into the automatic distance control mode, the central control unit 18 commands the display of two icons for the purpose of indicating to the driver that automatic distance control is being effected and at what distance the controlled vehicle is being maintained from the preceding vehicle (block 130).

In Figures 4b, 4c and 4d there are illustrated by way of example 3 possible icons which may be displayed on the display unit 4 to indicate to the driver the fact that the automatic control device 2 is operating in automatic distance control mode. As can be seen, each of these icons is constituted by a composite closed line a first section of which partially surrounds the stylised representation of the motor vehicle in such a way as to give the sensation that the preceding vehicle has been "captured", whilst within a second section is represented a kind of level indicator formed by a plurality of vertically adjacent strips selectively illuminable to represent the distance at which the vehicle is maintained with respect to the preceding vehicle.

In particular, when a single strip is illuminated it indicates that the controlled vehicle will be maintained at the smallest possible distance from the preceding vehicle taking account of the speed of the controlled vehicle itself (SPORT condition), two strips illuminated indicate that the vehicle will be maintained at an intermediate distance from the preceding vehicle greater than the distance to which the vehicle is maintained in the SPORT condition (NORMAL condition), whilst three illuminated strips indicate that the vehicle will be maintained at a large distance from the preceding vehicle (COMFORT condition).

The central control unit 18 then continues to monitor the traffic conditions processing the information provided from the sensor device 16 (block 140) in such a way that when there is no longer a preceding vehicle in front, for example because the previous vehicle has turned or changed lane (output NO from block 140) the automatic control device 2 returns to the automatic speed control mode; therefore the block 140 again returns to block 80.

Simultaneously with the operations described above with reference to blocks 90-140, the central control unit 18 effects a constant detection of possible actions by the driver on the brake pedal 20 and accelerator pedal 22 (block 150).

If the central control unit 18 detects that the driver has pressed the brake pedal 20, it then interrupts the automatic speed and distance control and the control of the controlled vehicle returns to the driver (block 160).

According to the present invention, moreover, when it is detected that the driver has pressed on the brake pedal 20 the central control unit 18 interrupts the display of the icon indicative of the automatic distance control (block 170) whilst it continues to display the icon indicative of the presence of a preceding vehicle and to indicate the set cruise speed (block 180).

In this way, then, the driver is alerted to the fact that the control of the vehicle is again of manual type in that there is no longer present an icon indicative of the performance of an automatic distance control, whilst he continues to be constantly informed of the presence of a preceding vehicle, which information is vital for example in adverse atmospheric conditions such as fog, heavy rain etc.

When the driver is no longer pressing the brake pedal 20 the device 2 does not return to the automatic speed and distance control mode but remains waiting until the data relating to the cruise speed and distance are again introduced or the last data entered is recalled from the memory 8; therefore, from block 180 the system returns again to block 50.

If, instead, the central control unit 18 detects that the driver has pressed the accelerator pedal 22, then it interrupts the automatic speed and distance control and the control of the vehicle returns to the driver (block 190).

The central control unit 18 then signals to the driver that the vehicle is in an acceleration phase by for example, causing the speed indicative to flash, whilst it maintains the display of the icon indicative of the presence of a preceding vehicle, obviously if present in the path of the controlled vehicle (block 200).

Whilst the central control unit 18 performs the functions of block 200 it simultaneously remains waiting for the intervention of the driver to terminate (block 210) and when this occurs (output YES from block 210) then the device 2 returns to the automatic speed and distance control mode; therefore from block 210 it passes again to block 80.

From an examination of the characteristics of the automatic control device formed according to the present invention the advantages which can be obtained thereby are evident.

In particular, the automatic speed control device according to the present invention allows, without any increase in costs for the customer, simultaneously to satisfy both the requirements of having in any situation the predominance of manual control over automatic control effected by the control device and the requirement of a greater utilisation of the control device itself and of the information provided by it through the radar system.

In fact, thanks to the fact that in the present automatic control device the display of information on the outside situation is made independent of the automatic control operation, that is at each intervention of the driver on the brake pedal 20 only the automatic speed and distance control is interrupted but not the information display allows on the one hand for the driver to remain always totally responsible for the control of the vehicle, and on the other that the driver, after having entered, during a journey, data relating to the cruising speed and distance from the preceding vehicle, is constantly informed of the traffic conditions for the entire duration of the journey.

In this way, therefore, the time during which the driver has available information on the external situation is very much greater than with known control devices and very close to the overall time during which the vehicle is in motion, consequently making the adoption of an automatic control device more convenient.

Finally, it is clear that the automatic control device described and illustrated here can have modifications and variations introduced thereto without by this departing from the protective ambit of the present invention.

## Claims

1. A method for automatically controlling the speed and distance of a controlled vehicle, comprising the steps of:
a) setting (60) a speed to which the said controlled vehicle must be maintained;
b) selecting (60) an operating condition for the vehicle indicative of a relative distance to be maintained between the said controlled vehicle and a preceding vehicle, the said operating condition being a function of the said first operating value;
c) effecting (80, 120) automatic control of the speed and distance of the said controlled vehicle as a function of the set speed and the said selected operating condition;
d) detecting (90) the traffic conditions present in a region in front of the said controlled vehicle;
e) upon detection of the presence of a preceding vehicle in the path of the said controlled vehicle, and only after the said steps a), b) and c) have been performed at least once, displaying (100) on display means (4) at least a first indication representing the presence of the said preceding vehicle;
f) detecting (150) interventions by the driver of the said controlled vehicle on acceleration/deceleration control members (20, 22) of the controlled vehicle itself; and
g) interrupting (160-190) the said automatic control of the speed and distance of the said controlled vehicle upon detection of an intervention by the said driver on one of the said acceleration/deceleration control members (20, 22);
characterised in that it further includes the step of:
h) maintaining (180) the display at least of the said first indication of the presence of the said preceding vehicle upon detection of an intervention by the driver on one of the said acceleration/deceleration control members (20, 22).

2. A method according to Claim 1, characterised in that the said acceleration/deceleration control members (20, 22) comprise a brake pedal (20) and an accelerator pedal (22).

3. A method according to Claim 1 or Claim 2, characterised in that the said step d) comprises the step of:
d1) detecting (90) the presence of a preceding vehicle in the path of the said controlled vehicles.

4. A method according to any preceding claim,
characterised in that it further comprises the steps of:
i) displaying (70) on the said display means (4) a second indication representative of the performance of the said automatic speed control.

5. A method according to any preceding claim,
characterised in that it further comprises the steps of:
j) displaying (130) on the said display means (4) a third indication representative of the fact that the said automatic distance control is in operation.

6. A method according to any preceding claim,
characterised in that it further comprises the steps of:
k) displaying (130) on the said display means (4) a fourth indication representative of the distance to which the said controlled vehicle is maintained with respect to the said preceding vehicle.

7. An automatic control device for controlling the speed and distance of a controlled vehicle, comprising:
- setting means (60) for setting a speed to which the said controlled vehicle must be maintained;
- selector means (60) for selecting an operating condition of the vehicle indicative of a relative distance to be maintained between the said controlled vehicle and a preceding vehicle, the said operating condition being a function of the said first operative value;
- automatic speed and distance control means (80, 120) connected to the said setting means and to the said selector means (60) and operable to effect automatic control of the speed
and distance of the said controlled vehicle in dependence on the said set speed and the said selected operating conditions;
- sensor means (90) for detecting the traffic conditions present in a region in front of the said controlled vehicle;
- display means (4);
- first display control means (100) connected to the said sensor means (90) and the said display means (4) to control the display on the said display means (4) of at least one first indication representative of the presence of the said preceding vehicle, the said first indication being displayed upon detection of the presence of a preceding vehicle in the path of the said controlled vehicle and only after the said automatic speed and distance control means (80, 120) have been activated at least once;
- detector means (150) for detecting interventions by the driver of the said controlled vehicle on acceleration/ deceleration control members (20, 22) of the controlled vehicle; and
- inhibition means (160, 190) connected to the said detector means (150) and to the said automatic speed and distance control means (80, 120) for interrupting the said automatic speed and distance control of the said controlled vehicle upon detection of an intervention by the driver on one of the said acceleration/deceleration control members (20, 22);
- characterised in that it further comprises:
- display maintenance means (180) connected to the said detector means (150) and to the said display means (4) to maintain the display at least of the said first indication upon detection of an intervention by the driver on one of the said acceleration/deceleration control members (20, 22).

8. A device according to Claim 7, characterised in that the said acceleration/deceleration control members comprise a brake pedal (20) and an accelerator pedal (22).

9. A device according to Claim 7 or Claim 8,
characterised in that the said sensor means comprise means (90) for determining the presence of a preceding vehicle in the path of the said controlled vehicle.

10. A device according to any preceding claim from 7 to 10, characterised in that it further comprises:
- second display control means (70) for controlling the display on the said display means (4) of a second indication representative of the performance of an automatic speed control.

11. A device according to any of claims from 7 to 10,
characterised in that it further comprises:
- third display control means (130) for controlling the display on the said display means (4) of a third indication representing that automatic distance control is in operation.

12. A device according to any preceding claim from 7 to
11, characterised in that it further comprises:
- fourth display control means (130) for controlling the display on the said display means (4) of a fourth indication representative of the distance to which the said controlled vehicle is maintained with respect to the said preceding vehicle.
